# EUROPÄISCHE PATENTSCHRIFT

(11) **EP 3 528 633 B1**
(45) Veröffentlichungstag und Bekanntmachung des Hinweises auf die Patenterteilung: **11.05.2022**
(21) Anmeldenummer: 17791544.4
(22) Anmeldetag: 20.10.2017
(51) Int. Cl.: A21C 3/02

(54) **VORRICHTUNG ZUM BEARBEITEN UND TRANSPORTIEREN VON TEIGBÄNDERN**
APPARATUS FOR PROCESSING AND TRANSPORTING DOUGH SHEETS
DISPOSITIF POUR TRAITER ET TRANSPORTER DES FEUILLES DE PÂTE

(30) Priorität: 21.10.2016 AT 509722016
(43) Veröffentlichungstag der Anmeldung: 28.08.2019
(73) Patentinhaber: König Maschinen Gesellschaft m.b.H., 8045 Graz (AT)
(72) Erfinder: MAIER, Gernot, 8075 Hart bei Graz (AT); URSCHLER, Stefan, 8130 Frohnleiten (AT); STELZER, Hannes, 8502 Lannach (AT); STAUFER, Wolfgang, 1020 Wien (AT)
(74) Vertreter: Wildhack & Jellinek
(86) Internationale Anmeldenummer: PCT/AT2017/060281
(87) Internationale Veröffentlichungsnummer: WO 2018/071949

(56) Entgegenhaltungen:
- WO-A2-2011/003879
- US-A- 5 059 440
- US-A1- 2003 185 927
- US-A1- 2004 065 210
- US-A1- 2015 150 267

## Beschreibung

Die Erfindung betrifft eine Vorrichtung zum Bearbeiten und Transportieren von Teigbändern gemäß dem Oberbegriff des Patentanspruchs 1 sowie eine Anordnung zum Bearbeiten und Transportieren von Teigbändern gemäß dem Oberbegriff des Patentanspruchs 11.

Aus dem Stand der Technik sind diverse Walzwerke und Vorrichtungen bekannt, die darauf ausgerichtet sind, einen möglichst genauen, parallelen Walzspalt für Teigbänder einzustellen, um den Teig durch diesen Walzspalt durchzupressen und ein Teigband mit einer gleichmäßigen Dicke zu erzeugen.

So ist beispielsweise aus der US 2015/15026? A1 (HAAS JOHANNES [AT] ET AL) vom 4. Juni 2015 eine Vorrichtung zum Transport und Bearbeiten von Teigbändern bekannt umfassend eine erste Walze und eine unterhalb der ersten Walze angeordnete zweite Walze. Die erste Walze ist derart in einem Abstand zur zweiten Walze angeordnet ist, dass ein Teigband zwischen der ersten und der zweiten Walze in einer Transportrichtung bewegbar ist und einen Antrieb mit dem die erste Walze und die zweite Walze um ihre Achse rotierend antreibbar sind. Die Vorrichtung umfasst auch zwei Verstelleinrichtung, mit denen der Abstand von der ersten Walze um einen Drehpunkt zur zweiten Walze veränderbar ist.

Weiters ist aus der US 5 059 440 A (HAYASHI TORAHIKO [JP]) vom 22. Oktober 1991 eine Vorrichtung bekannt, mit der eine Walze in Relation zu einem auf einem Transportband transportiertem Teigband in dessen Transportrichtung und weiters vom Transportband weggeschwenkt werden kann.

Nachteil der aus dem Stand der Technik bekannten Systeme ist, dass nicht auf das Fließverhalten und die durch die zuvor erfolgte Verarbeitung erzeugte Struktur des Teigs Rücksicht genommen werden kann. Da in einem Walzwerk der mittlere Teil des Teigbandes nur in Transportrichtung fließen, jedoch am Rand des Teigbandes sowohl in Produktionsrichtung als auch seitlich nach außen fließen kann, entsteht ungewollt eine unterschiedliche Fließgeschwindigkeit im Teigband. Ein etwaig dem Walzwerk nachgereihtes Transportband kann diese Unterschiede jedoch nicht ausgleichen, wodurch eine sogenannte Schüsselung des Teigbandes - d.h. das Teigband liegt in der Mitte auf dem Transportband auf und wird am Rand durch dieses gezogen - entsteht. Die Auswirkungen der unterschiedlichen Fließgeschwindigkeit sind unterschiedliche Gewichtsverteilungen innerhalb des Teigbandes und damit Schwankungen des Gewichts der aus diesem Teigband produzierten Endprodukte. Da durch den hohen Qualitätsanspruch jedoch gleich schwere Produkte in gleicher Größe innerhalb relativ geringer Toleranzen produziert werden müssen, entsteht durch die Gewichtsschwankung entlang des Teigbandes ein erhöhter Verschnitt und damit eine erhöhte Ausschussproduktion.

Aufgabe der vorliegenden Erfindung ist es, eine gleichmäßige Fließgeschwindigkeit entlang der Breite sowie Länge eines Teigbandes zu erreichen sowie etwaigen, in einem Walzwerk auftretenden Unregelmäßigkeiten entgegenzuwirken und damit den Ausschuss des Teigs zu reduzieren.

Diese Aufgabe wird durch die kennzeichnenden Merkmale des Anspruchs 1 gelöst.

Im Zusammenhang mit dieser Anmeldung wird die Transportrichtung als Transportebene verstanden in der das Teigband bewegt wird. Normal zur Transportrichtung des Teigbandes wird folglich als normal bzw. senkrecht zur Breite des Teigbandes verstanden.

Durch die unabhängige Lagerung der beiden Walzen und die Verstellbarkeit der Walzen entlang der Transportrichtung des Teigbandes sowie der Verstellung des Abstands zwischen den Walzen ist eine unterschiedliche Druckaufbringung entlang der Breite eines Teigbandes möglich. Durch die unterschiedliche Verstellbarkeit der Walzen ist es weiters möglich, den Spalt zwischen der ersten Walze und der zweiten Walze unterschiedlich zu definieren, sodass Teig mit derselben Dichte entlang der Breite des Teigbandes durch das Walzwerk bzw. die Vorrichtung gelangt und auch dem Teig in der Mitte des Teigbandes ein definiertes Fließverhalten entlang der Transportrichtung sowie entlang der Breite des Teigbandes vorgegeben werden kann. Durch die gleichmäßige Fließgeschwindigkeit bzw. durch das gleichmäßige Fließverhalten des Teigs wird eine gleichmäßige Struktur innerhalb des Teigbandes erzeugt, wodurch sowohl die Gewichtsgenauigkeit im Teigband verbessert als auch der Verschnitt, insbesondere im Randbereich des Teigbandes, reduziert wird.

Weitere vorteilhafte Ausgestaltungen der Erfindung ergeben sich durch die Merkmale der abhängigen Ansprüche.

Eine einfache Verstellbarkeit der Seitenverstelleinrichtung und/oder der Höhenverstelleinrichtung wird bereitgestellt, indem die Höhenverstelleinrichtung und/oder die Seitenverstelleinrichtung zumindest einen Linearantrieb umfasst, der insbesondere als Pneumatikzylinder, Hydraulikzylinder, Linearmotor oder Spindeltrieb ausgebildet ist.

Erfindungsgemäß umfasst die Höhenverstelleinrichtung zwei Seitenschilde, wobei die Seitenschilde jeweils an einer der Stirnseiten zumindest einer der Walzen angeordnet sind, wobei die erste Walze oder die zweite Walze an den Seitenschildern drehbar gelagert sind, wobei die Seitenschilde mit einer Anzahl von, insbesondere vier, Gleitelementen an der Vorrichtung befestigt sind, und wobei die Seitenschilde entlang der Gleitelemente normal zur Transportrichtung des Teigbandes verstellbar sind, sodass der Abstand von der ersten Walze zur zweiten Walze veränderbar ist.

Eine besonders vorteilhafte Ausführungsform der erfindungsgemäßen Vorrichtung wird bereitgestellt, indem die Höhenverstelleinrichtung zwei Linearantriebe umfasst, wobei die Linearantriebe jeweils mit einem der Seitenschilde verbunden sind, wobei die Seitenschilde jeweils mittels der Linearantriebe entlang der Gleitelemente normal zur Transportrichtung des Teigbandes verstellbar sind, wobei insbesondere die Seitenschilde durch die Linearantriebe unterschiedlich verstellbar sind, sodass eine unterschiedliche Höhenverstellung der Seitenschilde aufbringbar ist. Durch die unterschiedliche Verstellung der Seitenschilde kann die Achse der Walze schräg gestellt werden und derart eine unterschiedliche Dicke entlang der Breite des Teigbandes eingestellt werden. Durch die Anordnung der Walzen bzw. deren Lagerung in den Seitenschilden und der Verstellung der Seitenschilde mittels der Linearantriebe ist es möglich, eine einfache Höhenverstellung der ersten Walze oder der zweiten Walze vorzusehen, womit der Abstand zwischen der ersten Walze und der zweiten Walze stufenlos einfach vorgebbar ist.

Erfindungsgemäß umfasst die Seitenverstelleinrichtung zwei Lagerschilde, wobei die Lagerschilde jeweils an einer der Stirnseiten zumindest einer der Walzen angeordnet sind und wobei die erste Walze oder die zweite Walze in den Lagerschilden drehbar gelagert sind, wobei die Seitenverstelleinrichtung zumindest zwei Verstelleinrichtungen aufweist, wobei die Lagerschilde mittels der Verstelleinrichtung in Transportrichtung des Teigbandes verstellbar sind.

Die Verstellung entlang der Transportrichtung des Teigbandes kann vorteilhaft stufenlos eingestellt werden, indem die Verstelleinrichtungen der Seitenverstelleinrichtung jeweils zumindest einen Linerantrieb umfassen, der jeweils mit einem der Lagerschilde verbunden und an der Vorrichtung derart angeordnet ist, dass bei Verstellung der Linearantriebe die erste Walze und/oder die zweite Walze in Transportrichtung des Teigbandes versetllbar sind.

Vorteilhaft ist vorgesehen, dass die Verstelleinrichtungen jeweils einen, insbesondere U-förmigen, Stellhebel umfassen, wobei die Stellhebel jeweils zwischen den Lagerschilden und den Linerantrieb angeordnet sind.

Eine einfache Verstellung der Lagerschilde und damit der ersten bzw. der zweiten Walze in Transportrichtung des Teigbandes wird bereitgestellt, indem die Lagerschilde jeweils mit einer Anzahl von, insbesondere vier, Gleitelementen an der Vorrichtung befestigt sind, wobei die Lagerschilde entlang der Gleitelemente in Transportrichtung des Teigbandes verstellbar sind.

Eine vorteilhafte Ausführungsform der Erfindung wird bereitgestellt, indem die Seitenverstelleinrichtung, insbesondere die Lagerschilde jeweils mit einer Anzahl von, vorzugsweise vier, Gleitelementen, an der Höhenverstelleinrichtung verstellbar befestigt ist, wobei mittels der Seitenverstelleinrichtung, insbesondere über die, zumindest eine der Walzen normal zur Transportrichtung des Teigbandes relativ zur Höhenverstelleinrichtung verstellbar ist und wobei die Höhenverstelleinrichtung, insbesondere die Seitenschilde, mit einer Anzahl von, insbesondere vier, Gleitelementen, an der Vorrichtung verstellbar befestigt ist, und wobei die Höhenverstelleinrichtung, insbesondere die Seitenschilde entlang der Gleitelemente, normal zur Transportrichtung des Teigbandes verstellbar ist, sodass der Abstand von der ersten Walze zur zweiten Walze veränderbar ist.

Durch die Anordnung der Seitenverstelleinrichtung an der Höhenverstelleinrichtung kann jeweils die erste und/oder die zweite Walze einfach und besonders vorteilhaft in Transportrichtung sowie normal zur Transportrichtung des Teigbandes verstellt werden, wobei gleichzeitig eine sehr kompakte Ausbildung der Vorrichtung erzielt wird.

Um die Walzen unabhängig voneinander jeweils in Transportrichtung des Teigbandes sowie normal zur Transportrichtung des Teigbandes verstellen zu können, ist vorteilhaft vorgesehen, dass die Vorrichtung eine Höhenverstelleinrichtung aufweist, mit der die erste Walze normal zur Transportrichtung des Teigbandes verstellbar ist, und eine Seitenverstelleinrichtung aufweist, mit der die erste Walze in Transportrichtung des Teigbandes verstellbar ist umfasst und dass die Vorrichtung eine Höhenverstelleinrichtung mit der die zweite Walze normal zur Transportrichtung des Teigbandes verstellbar ist, und eine Seitenverstelleinrichtung aufweist mit der die zweite Walze in Transportrichtung des Teigbandes verstellbar ist umfasst.

Um die Anwendungsmöglichkeit der erfindungsgemäßen Vorrichtung weiter zu verbessern und die Vielfalt der zu produzierenden Teiglinge bzw. Teigbänder weiter erhöhen zu können, ist vorgesehen, dass die erste Walze und/oder die zweite Walze als Satellitenwalze, Formgebungswalze oder Querroller ausgebildet ist.

Eine bevorzugte Ausführungsform der Vorrichtung kann bereitgestellt werden, indem die erste Walze in Transportebene des Teigbandes über der zweiten Walze, insbesondere fluchtend mit dieser angeordnet ist.

Ein weiterer Aspekt der Erfindung ist es, eine Anordnung zum Bearbeiten und Transportieren von Teigbändern bereitzustellen, die es ermöglicht, die Eigenschaften von Teigbändern entlang deren Breite in einem Walzwerk zu verbessern. Diese Aufgabe wird durch die kennzeichnenden Merkmale des Anspruchs 12 gelöst. Dabei ist vorgesehen, dass im Übergabebereich vom ersten Transportband zum zweiten Transportband eine erfindungsgemäße Vorrichtung angeordnet ist, wobei das Teigband von dem ersten Transportband über die erste Walze und die zweite Walze der Vorrichtung an das Transportband weitertransportierbar ist.

Durch die Anordnung einer erfindungsgemäßen Vorrichtung, beispielsweise innerhalb eines Walzwerks, können so auftretende Fehler und Ungleichmäßigkeiten entlang der Breite des Teigbandes bzw. innerhalb eines Teigbandes einfach ausgeglichen werden, wobei die erfindungsgemäße Vorrichtung an einer oder mehreren Stellen innerhalb eines Walzwerks bzw. innerhalb einer Vorrichtung zur Produktion von Teigbändern vorgesehen sein kann.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben:

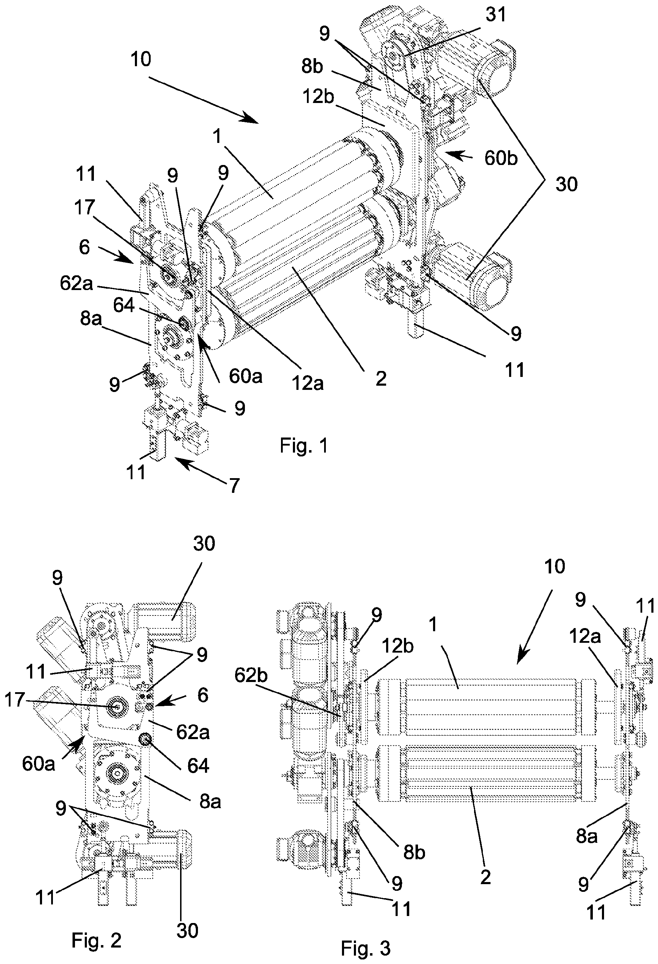

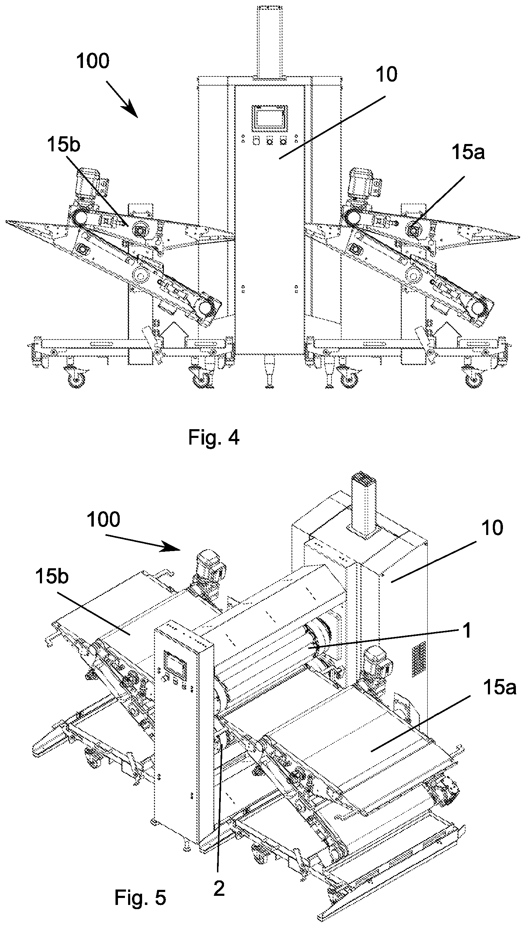

Fig. 1 zeigt eine isometrische Ansicht einer erfindungsgemäßen Vorrichtung, Fig. 2 zeigt eine Seitenansicht gemäß Fig. 1, Fig. 3 zeigt eine Frontansicht der erfindungsgemäßen Vorrichtung gemäß Fig. 1, Fig. 4 zeigt eine Seitenansicht einer Anordnung mit einer erfindungsgemäßen Vorrichtung und Fig. 5 zeigt eine isometrische Ansicht einer erfindungsgemäßen Anordnung.

In Fig. 1 ist eine Ausführungsform der erfindungsgemäßen Vorrichtung 10 in isometrischer Ansicht dargestellt. Die Vorrichtung 10 umfasst eine erste Walze 1 und eine zweite Walze 2, die im Anstand zueinander in der Transportebene in der das Teigband transportiert wird gesehen übereinander angeordnet sind. Die erste Walze 1 und die zweite Walze 2 sind zueinander beabstandet, sodass ein Teigband zwischen der ersten Walze 1 und der zweiten Walze 2 hindurch transportiert werden kann (Fig. 3). Die erste Walze 1 und die zweite Walze 2 sind jeweils durch einen Antrieb 30 über einen Riementrieb 31 angetrieben und werden durch den Antrieb 30 in ihrer Achse verdreht. Die Drehrichtung der ersten Walze 1 und der zweiten Walze 2 ist dabei gegenläufig und je nach Transportrichtung des Teigbandes wird beispielsweise die erste Walze 1 im Uhrzeigersinn und die zweite Walze 2 im Gegenuhrzeigersinn oder umgekehrt angetrieben. Die Vorrichtung 10 umfasst weiters eine Höhenverstelleinrichtung 7, mit der bei dieser Ausführungsform die erste Walze 1 normal zur Transportrichtung des Teigbandes verstellbar ist. Die Vorrichtung 10 weist weiters eine Seitenverstelleinrichtung 6 auf, mit der bei dieser Ausführungsform die erste Walze 1 in Transportrichtung des Teigbandes verstellbar ist. Durch die Anordnung der ersten Walze 1 mit der Höhenverstelleinrichtung 7 und der Seitenverstelleinrichtung 6 ist es möglich, sowohl den Abstand zwischen der ersten Walze 1 und der zweiten Walze 2 zu verändern, als auch eine relative Verstellung der ersten Walze 1 zur zweiten Walze 2 in Transportrichtung des Teigbandes zu bewirken.

In Fig. 2 ist eine Seitenansicht der in Fig. 1 dargestellten Ausführungsform der Vorrichtung 10 dargestellt. Fig. 3 zeigt dazu eine Frontansicht mit Blickrichtung in Transportrichtung eines in die Vorrichtung 10 eingebrachten Teigbandes gemäß der Fig. 1 und 2. Die Seitenverstelleinrichtung 6 umfasst zwei Lagerschilde 12a und 12b, die jeweils seitlich an einer der Stirnseiten der ersten Walze 1 angeordnet sind (Fig. 3). Die Lagerungen 17 der ersten Walze 1 sind jeweils in den Lagerschilden 12a, 12b angeordnet, wodurch die erste Walze 1 relativ zu den Lagerschilden 12a, 12b drehbar gelagert ist. Die Seitenverstelleinrichtung 6 weist weiters zwei Verstelleinrichtungen 60a, 60b auf, die jeweils mit einem der Lagerschilder 12a und 12b verbunden sind. Durch die Verstelleinrichtungen 60a und 60b werden die Lagerschilde 12a, 12b jeweils in Transportrichtung des Teigbandes verstellt, wodurch die erste Walze 1 relativ zur zweiten Walze 2 in Transportrichtung des Teigbandes verstellt werden kann. Die Verstelleinrichtungen 60a, 60b der Seitenverstelleinrichtung 6 weisen jeweils einen Linearantrieb 11 auf, der als Hydraulikzylinder ausgebildet ist. Die Verstelleinrichtungen 60a, 60b weisen weiters jeweils einen u-förmigen Stellhebel 62a, 62 auf, mit dem das jeweilige Lagerschild 12a, 12b mit dem Linearantrieb 11 verbunden ist und dadurch verstellt werden kann. Die Verstellhebel 62a, 62b sind jeweils um eine Schwenkachse 64 verschwenkbar, wodurch eine Veränderung des Hubs des Linearantriebs 11 zu einer Verdrehung des Stellhebels 62a, 62b führt und damit das jeweilige Lagerschild 12a, 12b in Transportrichtung eines etwaig zwischen der ersten Walze 1 und der zweiten Walze 2 eingelegten Teigbandes verstellt wird. Da an jeder Seite der ersten Walze 1 jeweils eine Verstelleinrichtung 60a, 60b angeordnet ist, die unabhängig voneinander verstellbar sind, kann die erste Walze 1 bezüglich der Transportrichtung des Teigbandes auch schräg angeordnet werden, wodurch die Achse der ersten Walze 1 zur Achse der zweiten Achse 2 schräg verstellt werden kann. Durch die Schrägstellung der ersten Walze 1 zur zweiten Walze 2 ist es möglich, einen unterschiedlichen Teigfluss entlang der Breite eines Teigbandes zu erzielen und damit mögliche Unregelmäßigkeiten entlang der Breite des Teigbandes positiv zu beeinflussen. Die Seitenverstelleinrichtung 6 weist weiters vier Gleitelemente 9 je Lagerschild 12a, 12b auf, an denen die jeweiligen Lagerschilde 12a, 12b linear verstellbar sind. Die Gleitelemente 9 ermöglichen damit, die Lagerschilde 12a, 12b in Richtung der Transportrichtung eines Teigbandes einfach zu verstellen. Die Höhenverstelleinrichtung 7 der Vorrichtung 10 weist zwei Seitenschilde 8a, 8b auf, die jeweils an einer der Stirnseiten der ersten Walze 1 angeordnet sind. Die Seitenschilde 8a, 8b sind jeweils über vier Gleitelemente 9 an der Vorrichtung 10 befestigt, wobei die Gleitelemente 9 eine Bewegung entlang der Höhe, also normal zur Transportrichtung des Teigbandes, ermöglichen. Die Gleitelemente 9 sind an den Seitenschilden 8a, 8b jeweils an den vier Eckbereichen der Seitenschilde 8a, 8b angeordnet und in einer kleinen Ausfräsung positioniert. Die Höhenverstelleinrichtung 7 weist weiters zwei Linearantriebe 11 auf, mit denen jeweils einer der Seitenschilde 8a, 8b in seiner Höhe, also normal zur Transportrichtung des Teigbandes bzw. normal zur Transportebene des Teigbandes, verstellbar ist. Durch die Verstellung der Seitenschilde 8a, 8b wird der Abstand zwischen der ersten Walze 1 und der zweiten Walze 2 verändert, wodurch die Dicke bzw. die Dickenverteilung entlang der Breite eines Teigbandes verstellt wird. Alternativ können die Seitenschilde 8a, 8b durch die Linearantriebe 11 auch unterschiedlich verstellt werden, sodass eine unterschiedliche Höhenverstellung der Seitenschilde 8a, 8b aufbringbar ist. Durch die unterschiedliche Verstellung der Seitenschilde kann 8a, 8b die Achse der Walze 1 schräg zur Achse der Walze 2 gestellt werden und derart eine unterschiedliche Dicke entlang der Breite des Teigbandes eingestellt werden.

Wie in den Fig. 1 bis 3 dargestellt, kann die Seitenverstelleinrichtung 6 optional an der Höhenverstelleinrichtung 7 befestigt sein, womit die Verstellung der Höhenverstelleinrichtung 7 bzw. der ersten Walze 1 zur zweiten Walze 2 auch eine Verstellung der Seitenverstelleinrichtung 6 normal zur Transportrichtung des Teigbandes bewirkt. So können beispielsweise die Gleitelemente 9 der Seitenverstelleinrichtung 6 bzw. die Lagerschilde 12a, 12b mit den Seitenschilden 8a, 8b der Höhenverstelleinrichtung 7 verbunden sein und die Seitenverstelleinrichtung 6 somit eine Verstellung der Lagerschilde 12a, 12b relativ zu den Seitenschilden 8a, 8b und damit eine Verstellung der ersten Walze 1 in Transportrichtung des Teigbandes bewirken.

Die Linearantriebe 11 der Höhenverstelleinrichtung 7 und/oder der Seitenverstelleinrichtung 6 können als Pneumatikzylinder, Linearmotoren, Spindeltriebe oder, wie in den Fig. 1 bis 3 dargestellt, als Hydraulikzylinder ausgebildet sein. Alternativ sind auch andere Verstellmöglichkeiten der Verstelleinrichtung 6 bzw. der Höhenverstelleinrichtung 7 möglich; so könnten diese beispielsweise über Riementriebe oder andere aus dem Stand der Technik bekannte Antriebe verstellt werden.

Wie in Fig. 1 und 2 dargestellt, weisen die Seitenschilde 8a, 8b eine Ausfräsung auf, durch die die Lagerung der zweiten Walze 2 hindurch erfolgt.

Alternativ zu der in Fig. 1 bis 3 dargestellten Ausführungsform kann auch die zweite Walze 2 über eine Höhenverstelleinrichtung 7 und eine Seitenverstelleinrichtung 6 verfügen und derart relativ zur ersten Walze 1 bzw. zum Teigband verstellt werden. So könnte beispielsweise eine analoge Ausbildung der Höhenverstelleinrichtung 7 bzw. der Seitenverstelleinrichtung 6 für die zweite Walze 2 in der Vorrichtung 10 vorgesehen sein. Hierzu könnten beispielsweise die Seitenschilder 8a, 8b der Höhenverstellvorrichtung 7 um das Zentrum der Seitenverstelleinrichtung 6 verschwenkt angeordnet sein und eine - gleich der für die erste Walze 1 vorgesehenen - Höhenverstelleinrichtung 7 und Seitenverstelleinrichtung 6 ebenfalls für die Lagerungen der zweiten Walze 2 an der Vorrichtung 10 angeordnet sein.

Wie in den Fig. 1 bis 3 dargestellt, können die erste Walze 1 und die zweite Walze 2 als sogenannte Satellitenwalze ausgebildet sein, wobei derartige Walzen eine sogenannte Sonnenwalze, die im Zentrum der Walze angeordnet ist, aufweisen, und eine Anzahl von Satellitenwalzen, die um diese Sonnenwalze herum gleichmäßig verteilt angeordnet sind. Alternativ kann vorgesehen sein, dass die erste Walze 1 und/oder die zweite Walze 2 auch andere Walzenformen aufweisen oder beispielsweise als Formgebungswalze oder Querroller ausgebildet sind.

In den Fig. 4 und 5 ist eine erfindungsgemäße Anordnung 100 in einer isometrischen Ansicht (Fig. 5) und einer Seitenansicht (Fig. 4) dargestellt. Beispielsweise kann innerhalb eines Walzsystems bzw. eines Walzwerks für Teigbänder vorgesehen sein, dass die erfindungsgemäße Vorrichtung 10 vor und/oder nach anderen Bearbeitungssystemen angeordnet ist. Hierzu kann beispielsweise vorgesehen sein, dass die Vorrichtung 10 im Übergabebereich eines Teigbandes von einem ersten Transportband 15a an ein zweites Transportband 15b angeordnet ist. Ein nicht dargestelltes Teigband würde sodann von dem ersten Transportband 15a in die Vorrichtung 10 eingebracht werden und so zwischen der ersten Walze 1 und der zweiten Walze 2 hindurch befördert und dann wieder an ein zweites Transportband 15b übergeben werden. Durch Verstellung des Abstands der ersten Walze 1 zur zweiten Walze 2 bzw. durch Veränderung des Winkels der Achse der ersten Walze 1 zur zweiten Walze 2 kann sodann die Fließgeschwindigkeit und das Fließverhalten entlang der Breite des Teigbandes bzw. innerhalb des Teigbandes positiv verändert werden.

Alternativ zu den in den Fig. 1 bis 3 dargestellten Ausführungsformen kann optional auch vorgesehen sein, dass lediglich die zweite Walze 2, also die unten liegende Walze, verstellbar ist, also eine Höhenverstelleinrichtung 7 und eine Seitenverstelleinrichtung 6 aufweist, und die erste Walze 1 starr mit der Vorrichtung 10 verbunden ist.

## Patentansprüche

1. Vorrichtung (10) zum Transport und Bearbeiten von Teigbändern umfassend eine erste Walze (1) und eine, vorzugsweise unterhalb der ersten Walze (1) angeordnete, zweite Walze (2), wobei die erste Walze (1) derart in einem Abstand zur zweiten Walze (1) angeordnet ist, dass ein Teigband zwischen der ersten Walze (1) und der zweiten Walze (2) in einer Transportrichtung bewegbar ist, und
einen Antrieb mit dem die erste Walze (1) und die zweite Walze (2) um ihre Achse rotierend antreibbar sind,
wobei die Vorrichtung (10) zumindest eine Höhenverstelleinrichtung (7) umfasst mit der zumindest eine der Walzen (1,2) normal zur Transportrichtung des Teigbandes derart verstellbar ist, dass der Abstand von der ersten Walze (1) zur zweiten Walze (2) veränderbar ist,
**wobei** die Vorrichtung (10) zumindest eine Seitenverstelleinrichtung (6) umfasst, mit der zumindest eine der Walzen (1, 2) in Transportrichtung des Teigbandes verstellbar ist, wobei die Höhenverstelleinrichtung (7) zwei Seitenschilde (8a, 8b) umfasst, wobei die Seitenschilde (8a, 8b) jeweils an einer der Stirnseiten zumindest einer der Walzen (1, 2) angeordnet sind, wobei die erste Walze (1) oder die zweite Walze (2) an den Seitenschildern (8a, 8b) drehbar gelagert sind,
wobei die Seitenschilde (8a, 8b) mit einer Anzahl von, insbesondere vier, Gleitelementen (9) an der Vorrichtung (10) befestigt sind, und wobei die Seitenschilde (8a, 8b) entlang der Gleitelemente (9) normal zur Transportrichtung des Teigbandes verstellbar sind, sodass der Abstand von der ersten Walze (1) zur zweiten Walze (2) veränderbar ist und wobei die Seitenverstelleinrichtung (6) zwei Lagerschilde (12a, 12b) umfasst, wobei die Lagerschilde (12a, 12b) jeweils an einer der Stirnseiten zumindest einer der Walzen (1,2) angeordnet sind und wobei die erste Walze (1) oder die zweite Walze (2) in den Lagerschilden (12a, 12b) drehbar gelagert sind, wobei die Seitenverstelleinrichtung (6) zumindest zwei Verstelleinrichtungen (60a, 60b) aufweist, wobei die Lagerschilde (12a, 12b) mittels der Verstelleinrichtung (60a, 60b) in Transportrichtung des Teigbandes verstellbar sind.

2. Vorrichtung (10) nach Anspruch 1, **dadurch gekennzeichnet, dass** die Höhenverstelleinrichtung (7) und/oder die Seitenverstelleinrichtung (6) zumindest einen Linearantrieb (11) umfasst, der insbesondere als Pneumatikzylinder, Hydraulikzylinder, Linearmotor oder Spindeltrieb ausgebildet ist.

3. Vorrichtung (10) nach Anspruch 1 oder 2, **dadurch gekennzeichnet, dass** die Höhenverstelleinrichtung (7) zwei Linearantriebe (11) umfasst, wobei die Linearantriebe (11) jeweils mit einem der Seitenschilde (8a, 8b) verbunden sind, wobei die Seitenschilde (8a, 8b) jeweils mittels der Linearantriebe (11) entlang der Gleitelemente (9) normal zur Transportrichtung des Teigbandes verstellbar sind, wobei insbesondere die Seitenschilde (8a, 8b) durch die Linearantriebe (11) unterschiedlich verstellbar sind, sodass eine unterschiedliche Höhenverstellung der Seitenschilde (8a, 8b) aufbringbar ist.

4. Vorrichtung (10) nach Anspruch einem der vorangehenden Ansprüche, **dadurch gekennzeichnet, dass** die Verstelleinrichtungen (60a, 60b) der Seitenverstelleinrichtung (6) jeweils zumindest einen Linerantrieb (11) umfassen, der jeweils mit einem der Lagerschilde (12a, 12b) verbunden und an der Vorrichtung (10) derart angeordnet ist, dass bei Verstellung der Linearantriebe (11) die erste Walze (1) und/oder die zweite Walze (2) in Transportrichtung des Teigbandes verstellbar sind.

5. Vorrichtung (10) nach Anspruch 4, **dadurch gekennzeichnet, dass** die Verstelleinrichtungen (60a, 60b) jeweils einen, insbesondere U-förmigen, Stellhebel (62a, 62b) umfassen, wobei die Stellhebel (62a, 62b) jeweils zwischen den Lagerschilden (12a, 12b) und den Linerantrieb (11) angeordnet sind.

6. Vorrichtung (10) nach einem der vorangehenden Ansprüche, **dadurch gekennzeichnet, dass** die Lagerschilde (12a, 12b) jeweils mit einer Anzahl von, insbesondere vier, Gleitelementen (9) an der Vorrichtung (10) befestigt sind, wobei die Lagerschilde (12a, 12b) entlang der Gleitelemente (9) in Transportrichtung des Teigbandes verstellbar sind.

7. Vorrichtung (10) nach einem der vorangehenden Ansprüche, **dadurch gekennzeichnet, dass** die Seitenverstelleinrichtung (6), insbesondere die Lagerschilde (12a, 12b) jeweils mit einer Anzahl von, vorzugsweise vier, Gleitelementen (9), an der Höhenverstelleinrichtung (7) verstellbar befestigt ist, wobei mittels der Seitenverstelleinrichtung (6), insbesondere über die Lagerschilde (12a, 12b), zumindest eine der Walzen (1, 2) normal zur Transportrichtung des Teigbandes relativ zur Höhenverstelleinrichtung (7) verstellbar ist und
wobei die Höhenverstelleinrichtung (7), insbesondere die Seitenschilde (8a, 8b), mit einer Anzahl von, insbesondere vier, Gleitelementen (9), an der Vorrichtung (10) verstellbar befestigt ist, und wobei die Höhenverstelleinrichtung (7), insbesondere die Seitenschilde (8a, 8b) entlang der Gleitelemente (9), normal zur Transportrichtung des Teigbandes verstellbar ist, sodass der Abstand von der ersten Walze (1) zur zweiten Walze (2) veränderbar ist.

8. Vorrichtung (10) nach einem der vorangehenden Ansprüche, **dadurch gekennzeichnet, dass** die Vorrichtung (10) eine Höhenverstelleinrichtung (7) aufweist, mit der die erste Walze (1) normal zur Transportrichtung des Teigbandes verstellbar ist, und eine Seitenverstelleinrichtung (6) aufweist, mit der die erste Walze (1) in Transportrichtung des Teigbandes verstellbar ist umfasst und
dass die Vorrichtung (10) eine Höhenverstelleinrichtung (7) mit der die zweite Walze (2) normal zur Transportrichtung des Teigbandes verstellbar ist, und eine Seitenverstelleinrichtung (6) aufweist mit der die zweite Walze (2) in Transportrichtung des Teigbandes verstellbar ist umfasst.

9. Vorrichtung (10) nach einem der vorangehenden Ansprüche, wobei die erste Walze (1) und/oder die zweite Walze (2) als Satellitenwalze, Formgebungswalze oder Querroller ausgebildet ist.

10. Vorrichtung (10) nach einem der vorangehenden Ansprüchen, **dadurch gekennzeichnet, dass** die erste Walze (1) in Transportebene des Teigbandes über der zweiten Walze, insbesondere fluchtend mit dieser angeordnet ist.

11. Anordnung (100) zum Bearbeiten und Transportieren von Teigbändern, umfassend ein erstes Transportband (15a) und ein zweites Transportband (15b), wobei ein Teigband von dem ersten Transportband (15a) an das zweite Transportband (15b) in einem Übergabebereich übergebbar und weitertransportierbar ist, **dadurch gekennzeichnet, dass** im Übergabebereich vom ersten Transportband (15a) zum zweiten Transportband (15b) eine Vorrichtung (10) nach einem der Ansprüche 1 bis 10 angeordnet ist, wobei das Teigband von dem ersten Transportband (15a) über die erste Walze (1) und die zweite Walze (2) der Vorrichtung (10) an das Transportband (15b) weitertransportierbar ist.

## Claims

1. Apparatus (10) for transporting and processing dough sheets, comprising a first roller (1) and a second roller (2), which is arranged preferably beneath the first roller (1), wherein the first roller (1) is arranged at a distance from the second roller (2) in such a way that a dough sheet can be moved in a transporting direction between the first roller (1) and the second roller (2), and
a drive by means of which the first roller (1) and the second roller (2) can be driven in rotation about their axis,
wherein the apparatus (10) comprises at least one height-adjustment device (7) by means of which at least one of the rollers (1, 2) can be adjusted in a direction normal to the transporting direction of the dough sheet in such a way that the distance from the first roller (1) to the second roller (2) can be altered,
wherein the apparatus (10) comprises at least one side-adjustment device (6) by means of which at least one of the rollers (1, 2) can be adjusted in the transporting direction of the dough sheet,
wherein the height-adjustment device (7) comprises two side shields (8a, 8b), wherein the side shields (8a, 8b) are each arranged on one of the end faces of at least one of the rollers (1, 2), wherein the first roller (1) or the second roller (2) is rotatably mounted on the side shields (8a, 8b),
wherein the side shields (8a, 8b) are fastened to the apparatus (10) by means of a number of, in particular four, sliding elements (9), and wherein the side shields (8a, 8b) can be adjusted along the sliding elements (9) in a direction normal to the transporting direction of the dough sheet, such that the distance from the first roller (1) to the second roller (2) can be altered and wherein
the side-adjustment device (6) comprises two bearing shields (12a, 12b), wherein the bearing shields (12a, 12b) are each arranged on one of the end faces of at least one of the rollers (1, 2) and wherein the first roller (1) or the second roller (2) is rotatably mounted in the bearing shields (12a, 12b), wherein the side-adjustment device (6) has at least two adjustment devices (60a, 60b), wherein the bearing shields (12a, 12b) can be adjusted by means of the adjustment device (60a, 60b) in the transporting direction of the dough sheet.

2. Apparatus (10) according to claim 1, **characterised in that** the height-adjustment device (7) and/or the side-adjustment device (6) comprises at least one linear drive (11) which is designed in particular as a pneumatic cylinder, hydraulic cylinder, linear motor or spindle drive.

3. Apparatus (10) according to claim 1 or 2, **characterised in that** the height-adjustment device (7) comprises two linear drives (11), wherein the linear drives (11) are each connected to one of the side shields (8a, 8b), wherein the side shields (8a, 8b) can each be adjusted by means of the linear drives (11) along the sliding elements (9) in a direction normal to the transporting direction of the dough sheet, wherein in particular the side shields (8a, 8b) can be adjusted differently by means of the linear drives (11) such that a different height adjustment of the side shields (8a, 8b) can be applied.

4. Apparatus (10) according to any of the preceding claims, **characterised in that** the adjustment devices (60a, 60b) of the side-adjustment device (6) each comprise at least one linear drive (11), each of which is connected to one of the bearing shields (12a, 12b) and is arranged on the apparatus (10) in such a way that, when the linear drives (11) are adjusted, the first roller (1) and/or the second roller (2) can be adjusted in the transporting direction of the dough sheet.

5. Apparatus (10) according to claim 4, **characterised in that** the adjustment devices (60a, 60b) each comprise an, in particular U-shaped, adjustment lever (62a, 62b), wherein the adjustment levers (62a, 62b) are each arranged between the bearing shields (12a, 12b) and the linear drive (11).

6. Apparatus (10) according to any of the preceding claims, **characterised in that** the bearing shields (12a, 12b) are each fastened to the apparatus (10) by means of a number of, in particular four, sliding elements (9), wherein the bearing shields (12a, 12b) can be adjusted along the sliding elements (9) in the transporting direction of the dough sheet.

7. Apparatus (10) according to any of the preceding claims, **characterised in that** the side-adjustment device (6) is, in particular the bearing shields (12a, 12b) are, fastened adjustably to the height-adjustment device (7) in each case by means of a number of, preferably four, sliding elements (9), wherein at least one of the rollers (1, 2) can be adjusted by means of the side-adjustment device (6), in particular via the bearing shields (12a, 12b), in a direction normal to the transporting direction of the dough sheet relative to the height-adjustment device (7) and
wherein the height-adjustment device (7) is, in particular the side shields (8a, 8b) are, fastened adjustably to the apparatus (10) by means of a number of, in particular four, sliding elements (9), and wherein the height-adjustment device (7), in particular the side shields (8a, 8b), can be adjusted along the sliding elements (9), in a direction normal to the transporting direction of the dough sheet, such that the distance from the first roller (1) to the second roller (2) can be altered.

8. Apparatus (10) according to any of the preceding claims, **characterised in that** the apparatus (10) has a height-adjustment device (7) by means of which the first roller (1) can be adjusted in a direction normal to the transporting direction of the dough sheet, and has a side-adjustment device (6) by means of which the first roller (1) can be adjusted in the transporting direction of the dough sheet and
**in that** the apparatus (10) has a height-adjustment device (7) by means of which the second roller (2) can be adjusted in a direction normal to the transporting direction of the dough sheet, and has a side-adjustment device (6) by means of which the second roller (2) can be adjusted in the transporting direction of the dough sheet.

9. Apparatus (10) according to any of the preceding claims, wherein the first roller (1) and/or the second roller (2) is designed as a satellite roller, shaping roller or transverse roller.

10. Apparatus (10) according to any of the preceding claims, **characterised in that** the first roller (1) is arranged in the transport plane of the dough sheet above the second roller, in particular in alignment with the latter.

11. Arrangement (100) for processing and transporting dough sheets, comprising a first conveyor belt (15a) and a second conveyor belt (15b), wherein a dough sheet can be transferred from the first conveyor belt (15a) to the second conveyor belt (15b) in a transfer region and can be transported further, **characterised in that in that** an apparatus (10) according to any of claims 1 to 10 is arranged in the transfer region from the first conveyor belt (15a) to the second conveyor belt (15b), wherein the dough sheet can be transported further from the first conveyor belt (15a) via the first roller (1) and the second roller (2) of the apparatus (10) to the second conveyor belt (15b).

## Revendications

1. Dispositif (10) destiné au transport et à la transformation de bandes de pâte, comprenant
un premier cylindre (1) et un second cylindre (2), de préférence agencé sous le premier cylindre (1), dans lequel le premier cylindre (1) est agencé à une certaine distance par rapport au second cylindre (2) de telle manière qu'une bande de pâte peut être déplacée entre le premier cylindre (1) et le second cylindre (2) dans une direction de transport, et
un dispositif d'entraînement grâce auquel le premier cylindre (1) et le second cylindre (2) peuvent être entraînés en rotation autour de leur axe,
dans lequel le dispositif (10) comprend au moins un dispositif de réglage en hauteur (7) grâce auquel au moins un des cylindres (1, 2) peut être réglé perpendiculairement par rapport à la direction de transport de la bande de pâte de telle manière que la distance entre le premier cylindre (1) et le second cylindre (2) peut être modifiée,
dans lequel le dispositif (10) comprend au moins un dispositif de réglage latéral (6) grâce auquel au moins un des cylindres (1, 2) peut être réglé dans la direction de transport de la bande de pâte,
dans lequel le dispositif de réglage en hauteur (7) comprend deux panneaux latéraux (8a, 8b), dans lequel les panneaux latéraux (8a, 8b) sont respectivement agencés au niveau d'une des faces d'extrémité d'au moins un des cylindres (1, 2), dans lequel le premier cylindre (1) ou le second cylindre (2) est monté rotatif au niveau des panneaux latéraux (8a, 8b),
dans lequel les panneaux latéraux (8a, 8b) sont fixés au dispositif (10) avec un certain nombre d'éléments antifriction (9), en particulier quatre, et dans lequel les panneaux latéraux (8a, 8b) peuvent être réglés le long des éléments antifriction (9) perpendiculairement à la direction de transport de la bande de pâte, de sorte que la distance entre le premier cylindre (1) et le second cylindre (2) peut être modifiée, et
dans lequel le dispositif de réglage latéral (6) comprend deux panneaux de palier (12a, 12b), dans lequel les panneaux de palier (12a, 12b) sont respectivement agencés au niveau d'une des faces frontales d'au moins un des cylindres (1, 2) et dans lequel le premier cylindre (1) ou le second cylindre (2) est monté rotatif dans les panneaux de palier (12a, 12b), dans lequel le dispositif de réglage latéral (6) présente au moins deux dispositifs de réglage (60a, 60b), dans lequel les panneaux de palier (12a, 12b) peuvent être réglés dans la direction de transport de la bande de pâte au moyen du dispositif de réglage (60a, 60b).

2. Dispositif (10) selon la revendication 1, **caractérisé en ce que** le dispositif de réglage en hauteur (7) et/ou le dispositif de réglage latéral (6) comprend au moins un dispositif d'entraînement linéaire (11) réalisé en particulier sous la forme d'un dispositif d'entraînement à vérin pneumatique, à vérin hydraulique, à moteur linéaire ou à broche.

3. Dispositif (10) selon la revendication 1 ou 2, **caractérisé en ce que** le dispositif de réglage en hauteur (7) comprend deux dispositifs d'entraînement linéaire (11), dans lequel les dispositifs d'entraînement linéaire (11) sont respectivement reliés à l'un des panneaux latéraux (8a, 8b), dans lequel les panneaux latéraux (8a, 8b) peuvent être réglés respectivement au moyen des dispositifs d'entraînement linéaire (11) le long des éléments antifriction (9) perpendiculairement à la direction de transport de la bande de pâte, dans lequel les panneaux latéraux (8a, 8b) peuvent en particulier être réglés de manière différente grâce aux dispositifs d'entraînement linéaire (11), de sorte qu'un réglage en hauteur différent des panneaux latéraux (8a, 8b) peut être appliqué.

4. Dispositif (10) selon l'une quelconque des revendications précédentes, **caractérisé en ce que** les dispositifs de réglage (60a, 60b) du dispositif de réglage latéral (6) comprennent respectivement au moins un dispositif d'entraînement linéaire (11) relié respectivement à l'un des panneaux de palier (12a, 12b) et agencé au niveau du dispositif (10) de telle manière que, lors du réglage des dispositifs d'entraînement linéaire (11), le premier cylindre (1) et/ou le second cylindre (2) peu(ven)t être réglé(s) dans la direction de transport de la bande de pâte.

5. Dispositif (10) selon la revendication 4, **caractérisé en ce que** les dispositifs de réglage (60a, 60b) comprennent respectivement un levier de réglage (62a, 62b), en particulier un levier de réglage en forme de U, dans lequel les leviers de réglage (62a, 62b) sont agencés respectivement entre les panneaux de palier (12a, 12b) et le dispositif d'entraînement linéaire (11).

6. Dispositif (10) selon l'une quelconque des revendications précédentes, **caractérisé en ce que** les panneaux de palier (12a, 12b) sont respectivement fixés au dispositif (10) au moyen d'un certain nombre d'éléments antifriction (9), en particulier quatre, dans lequel les panneaux de palier (12a, 12b) peuvent être réglés le long des éléments antifriction (9) dans la direction de transport de la bande de pâte.

7. Dispositif (10) selon l'une quelconque des revendications précédentes, **caractérisé en ce que** le dispositif de réglage latéral (6), en particulier les panneaux de palier (12a, 12b), est fixé de manière réglable au dispositif de réglage en hauteur (7) respectivement au moyen d'un certain nombre d'éléments antifriction (9), de préférence quatre, dans lequel au moins un des cylindres (1, 2) peut être réglé par rapport au dispositif de réglage en hauteur (7) perpendiculairement à la direction de transport de la bande de pâte au moyen du dispositif de réglage latéral (6), en particulier par l'intermédiaire des panneaux de palier (12a, 12b), et
dans lequel le dispositif de réglage en hauteur (7), en particulier les panneaux latéraux (8a, 8b), est fixé de manière réglable au dispositif (10) au moyen d'un certain nombre d'éléments antifriction (9), en particulier quatre, et dans lequel le dispositif de réglage en hauteur (7), en particulier les panneaux latéraux (8a, 8b), peut être réglé le long des éléments antifriction (9) perpendiculairement à la direction de transport de la bande de pâte, de sorte que la distance entre le premier cylindre (1) et le second cylindre (2) peut être modifiée.

8. Dispositif (10) selon l'une quelconque des revendications précédentes, **caractérisé en ce que** le dispositif (10) présente un dispositif de réglage en hauteur (7) au moyen duquel le premier cylindre (1) peut être réglé perpendiculairement à la direction de transport de la bande de pâte, et présente un dispositif de réglage latéral (6) au moyen duquel le premier cylindre (1) peut être réglé dans la direction de transport de la bande de pâte, et
**en ce que** le dispositif (10) comprend un dispositif de réglage en hauteur (7) au moyen duquel le second cylindre (2) peut être réglé perpendiculairement à la direction de transport de la bande de pâte, et présente un dispositif de réglage latéral (6) au moyen duquel le second cylindre (2) peut être réglé dans la direction de transport de la bande de pâte.

9. Dispositif (10) selon l'une quelconque des revendications précédentes, dans lequel le premier cylindre (1) et/ou le second cylindre (2) est/sont réalisé(s) sous la forme d'un cylindre satellite, d'un cylindre de façonnage ou d'un rouleau transversal.

10. Dispositif (10) selon l'une quelconque des revendications précédentes, **caractérisé en ce que** le premier cylindre (1) est agencé dans le plan de transport de la bande de pâte au-dessus du second cylindre, en particulier en alignement avec celui-ci.

11. Agencement (100) destiné au traitement et au transport de bandes de pâte, comprenant une première bande transporteuse (15a) et une seconde bande transporteuse (15b), dans lequel une bande de pâte peut être transférée et réacheminée de la première bande transporteuse (15a) vers la seconde bande transporteuse (15b) dans une région de transfert, **caractérisé en ce qu'**un dispositif (10) selon l'une quelconque des revendications 1 à 10 est agencé dans la région de transfert de la première bande transporteuse (15a) à la seconde bande transporteuse (15b), dans lequel la bande de pâte peut être réacheminée de la première bande transporteuse (15a) vers la bande seconde transporteuse (15b) par l'intermédiaire du premier cylindre (1) et du second cylindre (2) du dispositif (10).
